# EUROPÄISCHE PATENTSCHRIFT

(11) **EP 1 057 554 B1**
(45) Veröffentlichungstag und Bekanntmachung des Hinweises auf die Patenterteilung: **09.08.2006**
(21) Anmeldenummer: 00110603.8
(22) Anmeldetag: 18.05.2000
(51) Int. Cl.: B22C 1/22, C08G 18/54, C08K 5/5415

(54) **Bindemittelsystem für Formstoff-Mischungen zur Herstellung von Formen und Kernen**
Binder for producing foundry mould and core compositions
Liant pour la fabrication de compositions de moules et noyaux de fonderie

(30) Priorität: 01.06.1999 DE 19925115
(43) Veröffentlichungstag der Anmeldung: 06.12.2000
(73) Patentinhaber: Hüttenes-Albertus Chemische-Werke GmbH, 40549 Düsseldorf (DE)
(72) Erfinder: Torbus, Marek, Dr., 47800 Krefeld (DE); Ladégourdie, Gérard P.M., 40237 Düsseldorf (DE); Bartsch, Dieter, 30880 Laatzen (DE); Seeger, Klaus, Dr., 30171 Hannover (DE)
(74) Vertreter: Eisenführ, Speiser & Partner

(56) Entgegenhaltungen:
- DE-A- 2 759 262
- DE-A- 3 339 174
- US-A- 2 657 974
- US-A- 4 124 556
- US-A- 4 320 037

## Beschreibung

Bei der Herstellung von Gießformen und Kernen werden in großem Umfang Bindemittel-Systeme auf Polyurethan-Basis eingesetzt, und zwar insbesondere zur Form- und Kern-Herstellung nach dem Cold-Box- oder Polyurethan-No-Bake-Verfahren.

Bindemittelsysteme auf Polyurethanbasis für das Cold-Box- und für das Polyurethan-No-Bake-Verfahren umfassen typischerweise zwei wesentliche Bindemittelkomponenten, nämlich:
(1) eine Polyolkomponente, die ein Bindemittel mit mindestens zwei OH-Gruppen pro Molekül umfaßt, sowie
(2) eine Polyisocyanat-Komponente, die ein Bindemittel mit mindestens zwei Isocyanat-Gruppen pro Molekül umfaßt.

Diese Komponenten sind gegebenenfalls lösungsmittelhaltig und werden regelmäßig in separaten Gebinden verpackt und vertrieben.

Üblicherweise umfaßt die Polyolkomponente (erste Komponente) ein Phenolharz mit mindestens zwei OH-Gruppen pro Molekül. Von diesen haben Phenolharze des Benzyletherharz-Typs eine besondere Bedeutung erlangt. Hierbei handelt es sich um die Kondensationsprodukte eines Phenols der allgemeinen Formel I 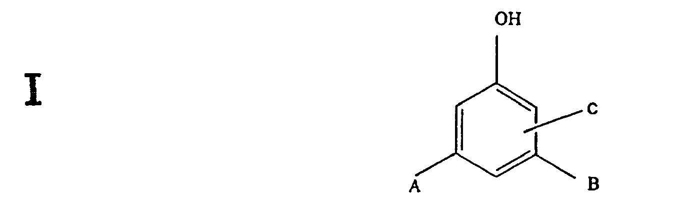 in der A, B und C Wasserstoff, Alkylgruppen oder Alkoxygruppen sind, mit Aldehyden der allgemeinen Formel R'CHO, in der R' ein Wasserstoffatom oder eine Alkylgruppe mit 1-8 Kohlenstoffatomen ist. Die Umsetzung von Phenolen der angegebenen allgemeinen Formel mit Aldehyden der allgemeinen Formel R'CHO erfolgt in der flüssigen Phase, typischerweise bei einer Temperatur unterhalb von 130 °C. Der Reaktionsmischung werden katalytische Mengen an ortho-dirigierenden zweiwertigen Metallionen wie Zn²⁺ zugesetzt.

Bevorzugte Benzylether-Harze entsprechen der folgenden allgemeinen Formel II:

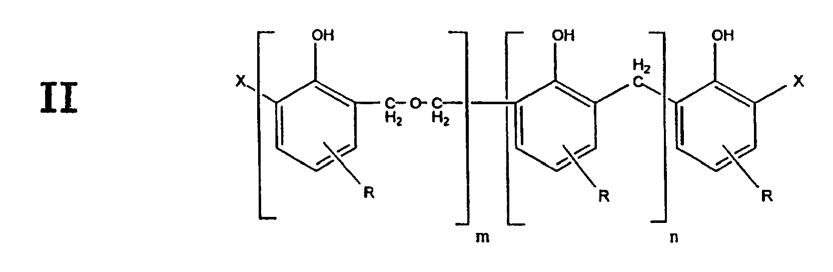

Hierin ist R Wasserstoff oder ein phenolischer Substituent in ortho-, meta- oder para-Stellung zur phenolischen Hydroxy-Gruppe; die Summe von m und n beträgt mindestens 2 und das Verhältnis m/n ist mindestens 1; X ist Wasserstoff oder CH₂OH, wobei das Verhältnis von Wasserstoff zu CH₂OH mindestens 1 ist.

Zur Verwendung in einem Zweikomponenten-Bindemittelsystem werden Phenolharze, insbesondere auch Benzyletherharze, üblicherweise als Lösung in einem organischen Lösungsmittel eingesetzt. Das Lösungsmittel ist erforderlich, um die Viskosität des Phenolharzes für die Vermischung mit einem Formstoff und die Umsetzung mit der Polyisocyanat-Komponente herabzusetzen.

Die Isocyanatkomponente (zweite Komponente) der Zweikomponenten-Bindemittelsysteme für das Coldbox- oder Polyurethan-No-Bake-Verfahren umfaßt üblicherweise ein aliphatisches, cycloaliphatisches oder aromatisches Polyisocyanat mit vorzugsweise zwischen zwei und fünf Isocyanat-Gruppen; es können auch Mischungen solcher Polyisocyanate eingesetzt werden. Besonders geeignete Polyisocyanate sind unter den aliphatischen Polyisocyanaten beispielsweise Hexamethylendiisocyanat, unter den alicyclischen Polyisocyanaten beispielsweise 4,4'-Dicyclohexylmethan-Diisocyanat und unter den aromatischen Polyisocyanaten beispielsweise 2,4'- und 2,6'-Toluol-Diisocyanat, Diphenylmethan-Diisocyanat und deren Dimethyl-Derivate. Weitere Beispiele geeigneter Polyisocyanate sind 1,5-Naphtalin-Diisocyanat, Triphenylmethan-Triisocyanat, Xylol-Diisocyanat und deren Methylderivate, Polymethylen-Polyphenyl-Isocyanate (polymeres MDI) usw. Obwohl alle Polyisocyanate mit dem Phenolharz unter Bildung einer vernetzten Polymerstoffstruktur reagieren, werden die aromatischen Polyisocyanate in der Praxis bevorzugt. Besonders bevorzugt sind Diphenylmethan-Diisocyanat (MDI), Triphenylmethan-Triisocyanat, Polymethylen-Polyphenyl-Isocyanate (polymeres MDI) und deren Mischungen.

Das Polyisocyanat wird in Konzentrationen eingesetzt, die ausreichen, das Aushärten des Phenolharzes zu bewirken. Im allgemeinen werden 10-500 Gew.-%, vorzugsweise 20-300 Gew.-% Polyisocyanat eingesetzt, bezogen auf die eingesetzte Masse an (unverdünntem) Phenolharz. Das Polyisocyanat wird in flüssiger Form eingesetzt; flüssige Polyisocyanate können in unverdünnter Form eingesetzt werden, feste oder viskose Polyisocyanate werden in Form einer Lösung in einem organischen Lösungsmittel eingesetzt, wobei das Lösungsmittel bis zu 80 Gew.-% der Polyisocyanat-Lösung ausmachen kann.

Bei der Auswahl der Lösungsmittel für die Phenolharz- und ggf. für die Polyisocyanat-Komponente ist zu beachten, daß diese zwar nicht in relevanter Weise an der Reaktion zwischen dem Isocyanat und dem Phenolharz in Gegenwart eines Katalysators teilnehmen, diese Reaktion aber sehr wohl beeinflussen können. Ein Problem stellt insbesondere der Umstand dar, daß die beiden Bindemittel-Komponenten Phenolharz und Polyisocyanat eine deutlich unterschiedliche Polarität besitzen. Diese Polaritätsdifferenz zwischen dem Polyisocyanat und dem Phenolharz beschränkt die Anzahl einsetzbarer Lösungsmittel auf diejenigen, die mit beiden Bindemittel-Komponenten kompatibel sind. Eine solche Kompatibilität ist notwendig, um eine vollständige Umsetzung und Aushärtung eines Bindemittelsystems zu erreichen. Polare Lösungsmittel des protischen oder aprotischen Typs sind regelmäßig zwar gute Lösungsmittel für das Phenolharz, sind für das Polyisocyanat jedoch nur wenig geeignet. Aromatische Lösungsmittel wiederum sind zwar mit Polyisocyanaten kompatibel, sind jedoch für Phenolharze nur wenig geeignet.

Üblicherweise werden in der Praxis daher Gemische von polaren und unpolaren, aromatenhaltigen Lösungsmitteln eingesetzt, die auf das jeweilige Bindemittelsystem (Phenolharz und Polyisocyanat) abgestimmt sind. Die einzelnen Bestandteile des Lösungsmittelgemisches sollen dabei im übrigen keinen zu niedrigen Siedebereich haben, damit das Lösungsmittel nicht durch Verdunstung zu rasch unwirksam werden kann.

Als unpolare, aromatenhaltige Lösungsmittel werden bisher bevorzugt Gemische von hochsiedenden aromatischen Kohlenwasserstoffen eingesetzt, d.h. Gemische aromatischer Kohlenwasserstoffe mit einem Siedebereich oberhalb von etwa 150° C bei Normaldruck. Als polare Lösungsmittel sind u.a. bestimmte ausreichend hochsiedende Ester zum Einsatz gekommen, wie z.B. die in der DE-PS 27 59 262 beschriebenen "symmetrischen" Ester, bei denen sowohl der Säurerest als auch der Alkoholrest eine im gleichen Bereich liegende, relativ große Anzahl von C-Atomen (etwa 6 - 13 C-Atome) aufweist.

Bei allen Vorteilen der Polyurethan-Bindemittel für die Gießereitechnik wird es doch stets als Nachteil empfunden, daß es beim Abgießen eines Gußstücks in einer Form, die ein Bindemittel auf Basis eines Polyrethans umfaßt, zu starken Benzolemissionen kommt. Diese Benzolemissionen beim Abguß, aber auch Ausdunstungen und Ausgasungen vor dem Abguß stellen eine erhebliche Arbeisplatzbelastung dar, die zumeist nicht durch Schutzmaßnahmen wie Abzugshauben oder dergleichen abgefangen werden kann.

Es war daher die Aufgabe der vorliegenden Erfindung, ein Bindemittelsystem auf Polyurethanbasis für das Cold-Box- und für das Polyurethan-No-Bake-Verfahren anzugeben, welches im Gießereibetrieb nur geringe Mengen an aromatischen Verbindungen freisetzt.

Erfindungsgemäß wird diese Aufgabe gelöst durch Angabe eines Zweikomponenten-Bindemittelsystems, bestehend aus einer Phenolharz-Komponente und einer Polyisocyanat-Komponente, wobei die Phenolharz-Komponente ein Phenolharz des Benzylether-Typs und die Polyisocyanat-Komponente ein Polyisocanat mit mindestens zwei Isocyanat-Gruppen pro Molekül umfaßt, und wobei zumindest die Phenolharz-Komponente ein Lösungsmittel enthält, wobei
das Lösungsmittel für das Phenolharz eine Substanz umfaßt, die aus der Gruppe ausgewählt ist, die Alkylsilikate, Alkylsilikat-Oligomere und deren Gemische (d.h. Mischungen verschiedener Alkylsilikate, Mischungen verschiedener Oligomere und Mischungen von Alkylsilikat(en) mit Oligomer(en)) umfaßt
und/oder
die Polyisocyanat-Komponente ein Lösungsmittel enthält, welches eine solche Substanz umfaßt, also eine Substanz, die aus der Gruppe ausgewählt ist, die Alkylsilikate, Alkylsilikat-Oligomere und deren Gemische umfaßt.

Der Anteil von Alkylsilikaten, Alkylsilikat-Oligomeren oder deren Gemischen in der Phenolharz-Komponenteliegt liegt dabei im Bereich zwischen 1 und 40 Gew.-%.

Der Anteil von Alkylsilikaten, Alkylsilikat-Oligomeren oder deren Gemischen in der Polyisocyanat-Komponente (falls diese eines Lösungsmittels bedarf) liegt vorteilhafterweise ebenfalls im Bereich zwischen 1 und 40 Gew.-%.

Die Erfindung beruht auf der überraschenden Erkenntnis, daß Alkylsilikate, also Alkylester der Kieselsäure, als Lösungsmittel bzw. als Lösungsmittelbestandteil (erstens) für Cold-Box-Phenolharze und Polyurethan-No-Bake-Phenolharze und/oder (zweitens) für die im Cold-Box- oder Polyurethan-No-Bake-Verfahren eingesetzten Polyisocyanate verwendet werden können, ohne daß sich Nachteile ergeben.

Oligomere von Alkylsilikaten, z.B. Oligomere von Tetraalkylsilikaten wie Dynasil 40 (Degussa-Hüls; CAS: 68412-37-3), Oligomere von Alkyltrialkoxysilanen, Oligomere von Dialkyldialkoxysilanen und Oligomere von Trialkylmonoalkoxysilanen können auf ebensolche Weise eingesetzt werden, insbesondere für die Phenolharz-Komponente.

Das Phenolharz und das Polyisocyanat können dabei aus der Gruppe der üblicherweise im Cold-Box-Verfahren oder No-Bake-Verfahren eingesetzten Verbindungen ausgewählt werden. Bevorzugt sind jedoch die weiter oben genannten Verbindungen und Verbindungsgruppen.

Bevorzugt ist insbesondere, daß die Phenolharz-Komponente ein Phenolharz des Benzylethertyps umfaßt, wie es oben anhand der allgemeinen Formel II beschrieben ist. Bei Einsatz von Alkylsilikat-Oligomeren ist es im Einzelfall sinnvoll, ein Alkylphenol wie o-Cresol, p-Nonylphenol oder p-tert.-Butylphenol im Gemisch insbesondere mit Phenol für die Herstellung des Phenolharzes zu verwenden.

Die Polyisocyanat-Komponente umfaßt vorzugsweise polymeres Diphenylmethandiisocyanat (polymeres MDI), wobei vorteilhafterweise mehr als die Hälfte der Isocyanat-Gruppen in der Polyisocyanat-Komponente Diphenylmethandiisocyanat-Molekülen zugeordnet sind.

Als besonders geeignetes Lösungsmittel haben sich in der Gruppe der Alkylsilikate die Tetraalkylsilikate und insbesondere das Tetraethylsilikat erwiesen. Tetraalkylsilikate wie Tetraethylsilikat können als Lösungsmittel in der Phenolharz-Komponente und/oder in der Polyisocyanat-Komponente eines Bindemittelsystems eingesetzt werden.

Als Lösungsmittel für die Polyisocyanat-Komponente können Alkylsilikate oder Alkylsilikat-Oligomere, insbesondere Tetraalkylsilikate wie Tetraethylsilikat, oder entsprechende Mischungen von Alkylsilikat(en) mit/oder Alkylsilikat-Oligomer(en) gemeinsam mit Co-Lösungsmitteln eingesetzt werden; das Massenverhältnis von Alkylsilikat (oder Oligomer oder Mischung) zu Co-Lösungsmittel ist dabei üblicherweise größer als 1:50, vorzugsweise aber größer als 1:4. Bei Massenverhältnissen unter 1:50 wirkt sich die Anwesenheit der Alkylsilikate (oder Oligomere oder entsprechenden Mischungen) im Lösungsmittel für die Polyisocyanat-Komponente nur noch wenig auf das Verhalten des Bindemittelsystems aus.

Vorteilhafterweise ist es möglich, ein Alkylsilikat, ein Alkylsilikat-Oligomer oder eine Mischung von Alkylsilikat(en) mit/oder Alkylsilikat-Oligomer(en) als alleiniges Lösungsmittel oder überwiegenden Lösungsmittelbestandteil (Massenverhältnis von Alkylsilikat zu Co-Lösungsmittel > 1:1) für das Polyisocyanat (bspw. polymeres MDI) einzusetzen.

Insbesondere kann Tetraethylsilikat oder ein Gemisch von Tetraethylsilikat mit anderen Alkylsilikaten oder mit Alkylsilikat-Oligomer als alleiniges Lösungsmittel oder überwiegender Lösungsmittelbestandteil (Massenverhältnis Tetraethylsilikat bzw. Gemisch zu Co-Lösungsmittel > 1:1) für das Polyisocyanat Verwendung finden.

Wird Tetraethylsilikat als alleiniges Lösungsmittel oder überwiegender Lösungsmittelbestandteil für das Polyisocyanat eingesetzt, so sollte das Massenverhältnis von Polyisocyanat zu Tetraethylsilikat in der Polyisocyanat-Komponente im Bereich zwischen 95 : 5 und 65 : 35 liegen.

Das Lösungsmittel für das Phenolharz besteht vorzugsweise aus
(a) Alkylsilikat, Alkylsilikat-Oligomer oder einem entsprechenden Gemisch aus Alkylsilikat(en) mit/oder Alkylsilikat-Oligomer(en) sowie
(b) einem Co-Lösungsmittel.
Das Massenverhältnis von Alkylsilikat (bzw. Oligomer oder Gemisch) zu Co-Lösungsmittel kann in weiten Grenzen variieren und liegt üblicherweise zwischen 1 : 60 und 5 : 1, vorzugsweise zwischen 1 : 44 und 35 : 10. Als Alkylsilikat ist wiederum Tetrethylsilikat bevorzugt.

Als Co-Lösungsmittel für das Phenolharz werden vorzugsweise die Polarität des Lösungsmittels erhöhende Zusätze eingesetzt. Zahlreiche polare Verbindungen sind hierfür geeignet, beispielsweise ein als "Dibasic Ester" oder kurz "DBE" bezeichnetes Gemisch aus Dimethylestern von C₄ - C₆₋Dicarbonsäuren.

Alternativ lassen sich auch die in der eigenen EP 0 771 559 A 1 beschriebenen Methylmonoester von einer oder mehreren Fettsäuren mit einer Kohlenstoffkette ab 12 C-Atomen als Co-Lösungsmittel einsetzen, beispielsweise also Rapsölmethylester.

Weiter alternativ läßt sich auch jedes andere für die Phenolharz-Komponente eines Zweikomponenten-Bindemittelsystems übliche Lösungsmittel als Co-Lösungsmittel neben Alkylsilikat, Alkylsilikat-Oligomer oder einem entsprechenden Gemisch einsetzen. Der Fachmann kann die geeigneten Mischungsverhältnisse im Einzelfall anhand weniger Vorversuche ermitteln.

Wenngleich es also im Grunde nicht ausgeschlossen ist, als Co-Lösungsmittel für die Phenolharz- (oder auch Polyisocyanat-) Komponente aromatische Verbindungen einzusetzen, so Ist es aus ökologischen Gründen doch klar bevorzugt, in den Lösungsmitteln für die Phenolharz- und Polyisocyanat-Komponente vollständig auf aromatische Verbindungen zu verzichten. Unter Verwendung der erfindungsgemäßen Alkylsilikat-haltigen Lösungsmittel ist dies ohne Nachteile bei der Herstellung von Formen und Kernen und beim Abguß derselben möglich. Hierin ist ein deutlicher Fortschritt gegenüber den bislang in der Praxis eingesetzten Bindemittelsystemen zu sehen.

Die Verwendung von Alkylsilikaten (wie Tetraalkylsilikat) oder Alkylsilikat-Oligomeren als Lösungsmittel (oder Lösungsmittelbestandteil) für die Phenolharz- und/oder Polyisocyanat-Komponente eines Zweikomponenten-Bindemittelsystems für das Cold-Box- und für das Polyurethan-No-Bake-Verfahren ist nicht nur aus ökologischer Sicht vorteilhaft. Auch in technologischer Hinsicht ist der Einsatz von Alkylsilikaten oder Alkylsilikat-Oligomeren nützlich. Insbesondere ist die thermische Beständigkeit von Formen und Kernen besonders hoch, bei deren Herstellung erfindungsgemäße Bindemittelsysteme Einsatz fanden. Zudem zeichnen sich derartige Formen und Kerne beim Abguß durch eine niedrigere Gasdruck-Entwicklung im Vergleich mit konventionellen Formen und Kernen aus.

Besonders hohe Festigkeiten ergeben sich, wenn Tetraethylsilikat der Hauptbestandteil des Lösungsmittels für das Phenolharz und gegebenenfalls das alleinige Lösungsmittel für die Polyisocyanat-Komponente ist. Bezogen auf das insgesamt eingesetzte Lösungsmittel sollte der Anteil an Alkylsilikat (bspw. Tetraalkylsilikat), Alkylsilikat-Oligomer oder entsprechenden Gemischen jedoch in jedem Fall den Anteil an aromatischen Lösungsmittelbestandteilen übersteigen.

In der nachfolgenden Tabelle sind - beginnend mit den bevorzugten Tetraalkylsilikaten - eine Reihe besonders bevorzugter (und gegebenenfalls substituierter) Alkyl(ortho)silikate angegeben:

**Tabelle 1:**

| | |
|---|---|
| Tetraalkylsilikate: | Tetraethyl(ortho)silikat; Tetra-n-propylsilikat |
| Trialkylsilikate: | Triethylsilikat; Trialkylsilikate (insbesondere Triethylsilikate) mit Arylfunktionalität am vierten Sauerstoffatom (Si-O-Ar; Ar = Arylrest) |
| Dialkylsilikate: | Diethylsilikat; Dialkylsilikate mit Arylfunktionalität am dritten und/oder vierten Sauerstoffatom (Si-O-Ar) |
| Monoalkylsilikate: | Monoethylsilikat; Monoalkylsilikate mit Arylfunktionalität am zweiten und/oder dritten und/oder vierten Sauerstoffatom (Si-O-Ar) |
| Substituierte Silikate: | (a) Aryl- oder Alkyl-Alkoxy-Silane, d.h. Verbindungen des Typs R¹ₙ₌₁₋₃Si(OR²)ₘ₌₄₋ₙ mit R¹ = Alkyl- oder Arylrest und R² = Alkylrest; z.B. Dimethyl-Dimethoxy-Silan (R¹ = CH₃; n = 2; R² = CH₃; m = 4-n = 2); |
| | (b) organofunktionelle Silane, d.h. Verbindungen des Typs R¹ₙ₌₁₋₃Si(OR²)ₘ₌₄₋ₙ mit R¹ = funktionelle Gruppe wie 3-Aminopropyl oder 3-Ureidopropyl oder 3-Glycidyloxypropyl und R² = Alkylrest; z.B. 3-Aminopropyl-triethoxysilan, 3-Ureidopropyl-triethoxysilan oder 3-Glycidyloxypropyl-trimethoxysilan. |

Die nachfolgenden Beispiele sollen die Erfindung erläutern, ohne sie einzuschränken. Die in den Beispielen verwendete Angabe "GT" bedeutet Gewichtsteile (Massenteile). Handelsnamen sind durch ein hochgestelltes "(H)" gekennzeichnet.

### Beispiel 1: Herstellung eines bevorzugten Phenolharzes des Benzylethertyps (Präkondensat):

In einem Reaktionsgefäß, das mit Kühler, Thermometer und Rührer ausgerüstet war, wurden

| | | |
|---|---|---|
| 385,0 | GT | Phenol |
| 176,0 | GT | Paraformaldehyd (als Formaldehydquelle) und |
| 0,11 | GT | Zinkacetat |

vorgelegt. Der Kühler wurde auf Rückfluß gesetzt. Die Temperatur wurde innerhalb einer Stunde kontinuierlich ansteigend auf 105° C gebracht und zwei bis drei Stunden auf dieser Temperatur gehalten, bis ein Brechungsindex von 1,550 erreicht war.

Dann wurde der Kühler auf atmosphärische Destillation umgestellt und die Temperatur innerhalb von einer Stunde auf 125 - 126° C erhöht, bis ein Brechungsindex von etwa 1,593 erreicht war.

Danach erfolgte eine Vakuumdestillation bis zu einem Brechungsindex von 1,612.

Die Ausbeute betrug 82 - 83 % der eingesetzten Rohstoffe.

Dieses Phenolharz wurde zur Herstellung von Prüfkörpern nach dem Cold-Box-Verfahren (Beispiel 4) und auch zur Herstellung von Prüfkörpern nach dem Polyurethan-No-Bake-Verfahren (Beispiel 8) eingesetzt.

### Beispiel 2: Herstellung von Cold-Box-Phenolharzlösungen:

Aus dem Phenolharz (Präkondensat) gemäß Beispiel 1 wurden nach Erreichen des Brechungsindex-Sollwertes Harzlösungen für das Cold-Box-Verfahren hergestellt, welche die nachfolgend angegebenen Zusammensetzungen aufwiesen:
Erfindungsgemäß: Cold-Box-Harzlösungen HA 1 - HA 5
Harzlösung HA 1

| | | |
|---|---|---|
| 55 | GT | Phenolharz (Präkondensat) |
| 30 | GT | Tetraethylsilikat |
| 14,7 | GT | DBE ("Dibasic Ester") |
| 0,3 | GT | Aminosilan oder Amidosilan |

Harzlösung HA 2

| | | |
|---|---|---|
| 55 | GT | Phenolharz (Präkondensat) |
| 35 | GT | Tetraethylsilikat |
| 9,7 | | GT DBE |
| 0,3 | GT | Aminosilan oder Amidosilan |

Harzlösung HA 3

| | | |
|---|---|---|
| 55 | GT | Phenolharz (Präkondensat) |
| 15 | GT | Tetraethylsilikat |
| 29,7 | GT | DBE |
| 0,3 | GT | Aminosilan oder Amidosilan |

Harzlösung HA 4

| | | |
|---|---|---|
| 55 | GT | Phenolharz (Präkondensat) |
| 1 | GT | Tetraethylsilikat |
| 43,7 | GT | DBE |
| 0,3 | GT | Aminosilan oder Amidosilan |

Harzlösung HA 5

| | | |
|---|---|---|
| 55 | GT | Phenolharz (Präkondensat) |
| 5 | GT | Tetraethylsilikat |
| 44,7 | GT | DBE |
| 0,3 | GT | Aminosilan oder Amidosilan |

Herkömmlich zum Vergleich: Cold-Box-Harzlösung HB 1

| | | |
|---|---|---|
| 51 | GT | Phenolharz (Präkondensat) |
| 10 | GT | Isophoron |
| 8 | GT | Plastomoll DOA |
| 11 | GT | Triacetin |
| 20 | GT | Solvesso 150 (C₁₁ - C₁₃ Aromatengemisch) |
| 0,3 | GT | Aminosilan oder Amidosilan |

### Beispiel 3 Herstellung von Polyisocyanat-Lösungen für das Coldbox-Verfahren:

### Erfindungsgemäß: Polyisocyanat-Lösungen AA 1 - AA 2

Polyisocyanat-Lösung AA 1

| | | |
|---|---|---|
| 80 | GT | Diphenylmethandiisocyanat |
| 19,8 | GT | Tetraethylsilikat (alleiniges Lösungsmittel) |
| 0,2 | GT | Säurechlorid (Additiv zur Verlängerung der Sandlebenszeit) |

Polyisocyanat-Lösung AA 2

| | | |
|---|---|---|
| 70 | GT | Diphenylmethandiisocyanat |
| 29,8 | GT | Tetraethylsilikat (alleiniges Lösungsmittel) |
| 0,2 | GT | Säurechlorid (Additiv zur Verlängerung der Sandlebenszeit) |

Herkömmlich zum Vergleich: Polyisocyanat-Lösung AB 1

| | | |
|---|---|---|
| 80 | GT | Diphenylmethandiisocyanat |
| 19,7 | GT | Shellsol R (Lösungsmittel; enthält etwa 85% aromatische Verbindungen) |
| 0,3 | GT | Säurechlorid (Additiv zur Verlängerung der Sandlebenszeit) |

### Beispiel 4: Herstellung von Cold-Box-Prüfkörpern und kerntechnische Prüfung derselben:

a) Unter Verwendung der oben angegebenen Phenolharz-und Polyisocyanat-Lösungen (vgl. die Beispiele 2 und 3) wurden die in den nachfolgenden Tabelle 2a und 2b aufgeführten Formsand-Mischungen hergestellt, indem jeweils

| | | |
|---|---|---|
| 100 | GT | Quarzsand H 32, |
| 0,8 | GT | der jeweiligen Phenolharzlösung (Beispiel 2) und |
| 0,8 | GT | der jeweiligen Polyisocyanat-Lösung (Beispiel 3) |

in einem Schwingmischer vermischt wurden.
Die Mischzeit betrug jeweils 60 s. Mit den erhaltenen Mischungen wurden bei einem Schießdruck von 4 bar Prüfkörper (+GF+ Riegel) geschossen, die anschließend 10 s lang bei einem Begasungsdruck von 4 bar mit Dimethylisopropylamin begast und dann 10 s lang mit Luft gespült wurden. Die Sandmenge pro Prüfkörper betrug 3 kg, die Sandtemperatur und die Raumtemperatur lagen bei etwa 25 °C, die relative Luftfeuchtigkeit (RLF) betrug in etwa 39 %.
Anschließend wurden die Biegefestigkeiten der so erhaltenen Prüfkörper nach der GF-Methode ermittelt.
Bei der Herstellung der Prüfkörper und der Prüfung der Biegefestigkeiten wurden die Vorschriften des VDG-Merkblatts P 73 vom Februar 1996 beachtet.
In Tabelle 2a sind zunächst die Festigkeitswerte von fünf erfindungsgemäßen und einem herkömmlichen Kern gegenübergestellt (in N/cm²).
In Tabelle 2b sind die Festigkeitswerte von vier weiteren erfindungsgemäßen Kernen angegeben (in N/cm²); die Festigkeitswerte des herkömmlichen Kerns aus Tabelle 2a sind zu Vergleichszwecken nochmals angegeben.
Für die in den Tabellen 2a und 2b zusammengefaßten Ergebnisse wurden Untersuchungen zum einen mit einer sofort nach dem Vermischen zu einem Form-Prüfkörper verarbeiteten Mischung (Spalte "SOFORT") und zum anderen mit einer nach dem Vermischen (zur Beurteilung der sog. "Sandlebenszeit") zunächst eine Stunde gelagerten und dann zu einem Form-Prüfkörper verarbeiteten Mischung (Spalte "1 STUNDE") durchgeführt.
Die Ermittlung der Biegefestigkeiten der jeweiligen Prüfkörper erfolgte sofort nach dem Begasen (Unterspalten "sof."; Anfangsfestigkeit) sowie eine Stunde (Unterspalten "1H") bzw. 24 Stunden (Unterspalten "24 h"; Endfestigkeit) nach dem Begasen.
b) In Tabelle 2a sind in den mit den Buchstaben A - F gekennzeichneten Spalten zusätzlich noch einige anwendungstechnische Eigenschaften der erfindungsgemäßen Kerne (mit Phenolharz-Lösung HA 1 - HA 5 und Polyisocyanat-Lösung AA 1) im Vergleich mit dem herkömmlichen Kern (Phenolharzlösung HB 1, Polyisocyanat-Lösung AB 1) veranschaulicht. Dazu wurden sechs unterschiedliche Prüfreihen durchgeführt, nämlich:
- Reihe A:: Kerne (Prüfkörper) 1 Tag im Labor gelagert, am nächsten Tag in Wasser getaucht, luftgetrocknet, nach 1 Tag (Unterspalte "1 d") bzw. 2 Tagen ("2 d") geprüft.
- Reihe B:: Kerne sofort nach Herstellung in Wasserschlichte getaucht, luftgetrocknet, nach 1 bzw. 2 Tagen ("1 d" bzw. "2 d") geprüft.
- Reihe C:: Kerne 1 Tag im Labor gelagert, am nächsten Tag in Wasserschlichte getaucht, 1 Stunde im Ofen bei 150°C getrocknet, nach Erkalten (*) geprüft.
- Reihe D:: Kerne sofort nach Herstellung in Wasserschlichte getaucht, 1 Stunde im Ofen bei 150°C getrocknet, nach Erkalten (*) geprüft.
- Reihe E:: Kerne einen Tag im Labor gelagert, dann für 1 bzw. 2 Tage ("1d" bzw. "2 d") bei über 95% relativer Luftfeuchtigkeit gelagert, dann geprüft.
- Reihe F:: Kerne bei über 95% relativer Luftfeuchtigkeit für 1 bzw. 2 Tage ("1 d" bzw. "2 d") gelagert, dann geprüft.

Die in den nachfolgenden Tabellen 2a und 2b zusammengefaßten Ergebnisse lassen erkennen, daß die erfindungsgemäß hergestellten Prüfkörper (Kerne) teilweise sogar bessere Festigkeitswerte als die auf herkömmliche Weise hergestellten Kerne aufweisen.

Der wesentliche Unterschied zum herkömmlichen Kern besteht aber darin, daß die erfindungsgemäßen Kerne bei ihrer Herstellung und auch beim Gießen keine spürbare Arbeitsplatzbelastung mehr verursachen. Das Verhalten beim Gießen haben labormäßig durchgeführte Probe-Abgüsse bestätigt, wie sich dem nachfolgenden Beispiel 5 entnehmen läßt.

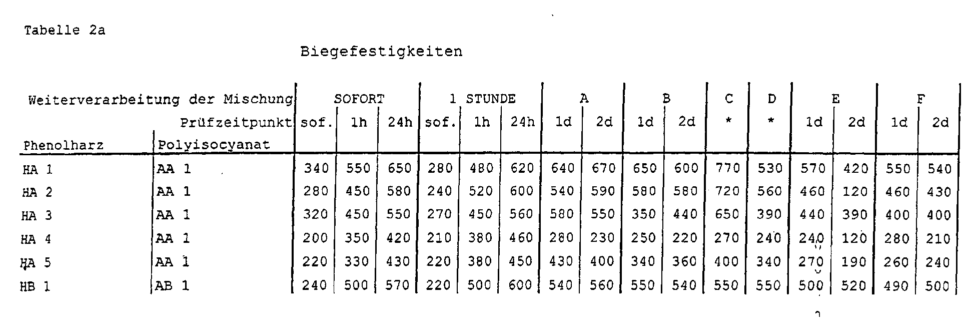

**Tabelle 2b**

| Biegefestigkeiten | | | | | | | |
|---|---|---|---|---|---|---|---|
| Weiterverarbeitung der Mischung | | SOFORT | | | 1 STUNDE | | |
| | Prüfzeitpunkt | sof. | 1h | 24h | sof. | 1h | 24h |
| Phenolharz | Polyisocyanat | | | | | | |
| HA 1 | AA 2 | 280 | 400 | 510 | 280 | 460 | 590 |
| HA 3 | AA 2 | 340 | 440 | 620 | 320 | 470 | 620 |
| HA 4 | AA 2 | 260 | 360 | 500 | 250 | 430 | 500 |
| HA 5 | AA 2 | 280 | 380 | 500 | 280 | 450 | 530 |
| HB 1 | AB 1 | 240 | 500 | 570 | 220 | 500 | 600 |

### Beispiel 5: Emissionsprüfung

Für einen erfindungsgemäßen Cold-Box-Kern (100 GT Quarzsand H 32, je 1,0 GT Phenolharz-Lösung HA 1 und Polyisocyanat-Lösung AA 1); vgl. oben die Beispiele 2 und 3) und einen herkömmlichen Cold-Box-Kern (100 GT Quarzsand H 32, je 1,0 GT Phenolharz-Lösung HC 1 und Polyisocyanat-Lösung AC 1, Zusammensetzungen siehe unten) wurden Pyrolysen bei jeweils 700°C und 900°C unter Stickstoff durchgeführt. Mittels eines Gaschromatographen wurden die bei der Pyrolyse entstehenden Mengen an Benzol und Toluol ermittelt. Die Ergebnisse sind in Tabelle 3 zusammengefaßt:

**Tabelle 3:**

| Probe | Temperatur | Benzol | Toluol | Einheit |
|---|---|---|---|---|
| HC 1 / AC 1 | 700 °C | 3,300 | 0,739 | mg/4 g Kern |
| | 900 °C | 3,289 | 0 | |
| HA 1 / AA 1 | 700 °C | 1,581 | 0 | mg/4 g Kern |
| | 900 °C | 2,444 | 0 | |

Man erkennt, daß die Benzol- und Toluolemission bei dem erfindungsgemäßen System deutlich geringer war als bei dem herkömmlichen System.
Zusammensetzung Cold-Box-Harzlösung HC 1:

| | | |
|---|---|---|
| 52,0 | GT | Phenolharz (Präkondensat) |
| 20,0 | GT | Solvesso 100 (C₈ - C₁₁ - Aromatengemisch) |
| 10,0 | GT | Dinonylphtalat |
| 10,0 | GT | Dinonyladipat |
| 7,7 | GT | Isophoron |
| 0,3 | GT | Aminosilan oder Amidosilan |

Zusammensetzung Cold-Box-Polyisocyanat-Lösung AC 1:

| | | |
|---|---|---|
| 85,0 | GT | Diphenylmethandiisocyanat |
| 14,7 | GT | Solvesso 150 (C₁₁ - C₁₃ - Aromatengemisch) |
| 0,3 | GT | Säurechlorid (Additiv zur Verlängerung der Sandlebenszeit) |

### Beispiel 6: Gasdruckmessung

Für einen erfindungsgemäßen Cold-Box-Kern (100 GT Quarzsand H 32, je 0,8 GT Phenolharz-Lösung HA 1 und Polyisocyanat-Lösung AA 1; vgl. oben die Beispiele 2 und 3) und einen herkömmlichen Cold-Box-Kern (100 GT Quarzsand H 32, je 0,8 GT Phenolharz-Lösung HC 1 und Polyisocyanat-Lösung AC 1, Zusammensetzungen siehe oben Beispiel 5) wurde eine Gasdruckmessung gemäß der Vorschrift von H. Gerard Levelink et al, Giesserei 67 (1980) Nr. 5, Seite 110 "Untersuchungsverfahren" durchgeführt.

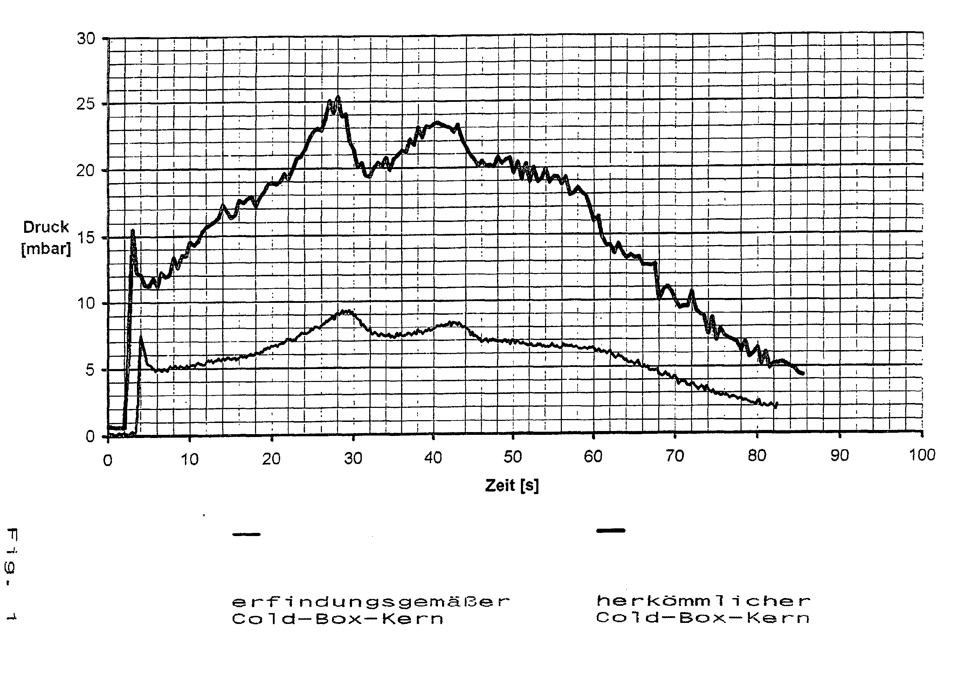

Das Versuchsergebnis ist in dem beigefügten Gasdruck-Zeit-Diagramm (Fig. 1) zusammengefaßt. Aus einem Vergleich der Gasdruckkurven wird unmittelbar klar, daß der erfindungsgemäße Cold-Box-Kern (untere, dünne Linie) ein deutlich besseres Gasdruckentwicklungs-Verhalten aufweist als der herkömmliche Vergleichs-Cold-Box-Kern (obere, fette Linie).

### Beispiel 7: Herstellung von Phenolharz-Lösungen für das Polyurethan-No-Bake-Verfahren:

Aus dem Phenolharz (Präkondensat) gemäß Beispiel 1 wurden nach Erreichen des Brechungsindex-Sollwertes Harzlösungen hergestellt, welche die nachfolgend angegebene Zusammensetzung aufwiesen:
Erfindungsgemäß: No-Bake-Phenolharz-Lösung 1

| | | |
|---|---|---|
| 55 | GT | Phenolharz (Präkondensat) |
| 30 | GT | Tetraethylsilikat |
| 14,7 | GT | DBE |
| 0,3 | GT | Aminosilan |

Herkömmlich zum Vergleich: No-Bake-Phenolharz-Lösung 2

| | | |
|---|---|---|
| 50 | GT | Phenolharz (Präkondensat) |
| 28 | GT | DBE |
| 17 | GT | Hydrosol AFD^{H} (Gemisch hochsiedender Aromaten) |
| 0,3 | GT | Aminosilan |

### Beispiel 8: Herstellung von Polyisocyanat-Lösungen für das No-Bake-Verfahren:

Es wurden folgende Polyisocyanat-Lösungen für das No-Bake-Verfahren hergestellt:
Erfindungsgemäß: No-Bake-Polyisocyanat-Lösung 1

| | | |
|---|---|---|
| 80 | GT | Diphenylmethandiisocyanat |
| 20 | GT | Tetraethylsilikat |

Herkömmlich zum Vergleich: No-Bake-Polyisocyanat-Lösung 2

| | | |
|---|---|---|
| 80 | GT | Diphenylmethandiisocyanat |
| 20 | GT | Solvesso 100 (C₈ bis C₁₁-Aromatengemisch) |

### Beispiel 9: Herstellung von No-Bake-Prüfkörpern und kerntechnische Prüfung derselben

Aus den No-Bake-Phenolharz-Lösungen und -Polyisocyanat-Lösungen gemäß den Beispielen 6 und 7 wurden in einem Schwingmischer Formstoffmischungen folgender Zusammensetzungen hergestellt:
Erfindungsgemäß: No-Bake-Mischung 1 (No-Bake-Phenolharz-Lösung 1, No-Bake-Polyisocyanat-Lösung 1)

| | | |
|---|---|---|
| 100 | GT | Quarzsand H 32 |
| 0,8 | GT | No-Bake-Phenolharz-Lösung 1 |
| 0,8 | GT | No-Bake-Polyisocyanat-Lösung 1 |
| 0,6 | GT | Katalysator bezogen auf No-Bake-Phenolharz-Lösung 1 |
| | | (Katalysator = Phenylpropylpyridin) |

Herkömmlich zum Vergleich: No-Bake-Mischung 2 (No-Bake-Phenolharz-Lösung 2, No-Bake-Polyisocyanat-Lösung 2)

| | | |
|---|---|---|
| 100 | GT | Quarzsand H 32 |
| 0,8 | GT | No-Bake-Phenolharz-Lösung 2 |
| 0,8 | GT | No-Bake-Polyisocyanat-Lösung 2 |
| 0,6 | GT | Katalysator bezogen auf No-Bake-Phenolharz-Lösung 2 |
| | | (Katalysator = Phenylpropylpyridin) |

Die No-Bake-Mischungen 1 und 2 wurden in Formen gestampft und dem Abbinden überlassen. Wie sich aus der nachfolgenden Tabelle 4 ergibt, hatte die Mischung 1 nach 7 und die Mischung 2 nach 6 Minuten angezogen; beide Mischungen waren nach 9 Minuten abgebunden. Nach jeweils 1 Stunde, 2 Stunden bzw. 24 Stunden wurden die Biegefestigkeiten der abgebundenen No-Bake-Mischungen gemäß VDG-Merkblatt P 72 E vom Februar 1996 ermittelt. Die ermittelten Festigkeitswerte sind einander in Tabelle 4 gegenübergestellt, wobei zu erkennen ist, daß die Festigkeitswerte der erfindungsgemäßen Mischung 1 durchweg deutlich besser sind als der herkömmlichen Mischung 2. Zur Arbeitsplatzbelastung gilt das in Beispiel 4 Gesagte in entsprechender Weise auch hier.

**Tabelle 4:**

| BIEGEFESTIGKEITEN | | | | | |
|---|---|---|---|---|---|
| | angezogen | abgebunden | 1h | 2h | 24h |
| | min. | min. | N/cm² | N/cm² | N/cm² |
| No-Bake- Mischung 1 | 7 | 9 | 230 | 340 | 590 |
| No-Bake- Mischung 2 | 6 | 9 | 170 | 260 | 600 |

Aus No-Bake-Mischung 1 lassen sich besonders geruchsarme Formen und Kerne herstellen.

Beim Abguß einer aus No-Bake-Mischung 1 hergestellten Form entwickelt sich im Vergleich zum Abguß einer aus No-Bake-Mischung 2 hergestellten Form nur wenig Qualm.

### Beispiel 10: Herstellung eines bevorzugten Phenolharzes des Benzylethertyps (Präkondensat) zur Verwendung mit Alkylsilikat-Oligomer:

In einem Reaktionsgefäß, das mit Kühler, Thermometer und Rührer ausgerüstet war, wurden

| | | |
|---|---|---|
| 235,4 | kg | Phenol |
| 235,4 | kg | Ortho-Kresol |
| 167,9 | kg | Paraformaldehyd |
| 0,9 | kg | Zinkacetat |

vorgelegt. Der Kühler wurde auf Rückfluss gesetzt.

Die Temperatur wurde innerhalb einer Stunde auf 115 °C gebracht und gehalten bis zu einem Brechungsindex n_{D}²⁰ = 1,562.

Dann wurde der Kühler auf atmosphärische Destillation umgestellt und die Temperatur innerhalb von einer Stunde auf 120 °C erhöht, bis ein Brechungsindex von n_{D}²⁰ = 1,591 erreicht war.

Danach erfolgte eine Vakuumdestillation bis zu einem Brechungsindex von n_{D}²⁰ = 1,606. Die Ausbeute betrug 85 % der eingesetzten Rohstoffe.

Dieses Phenolharz wurde zur Herstellung von Prüfkörpern nach dem Cold-Box-Verfahren und auch zur Herstellung von Prüfkörpern nach dem Polyurethan-No-Bake-Verfahren eingesetzt.

### Beispiel 11: Herstellung von Cold-Box-Phenolharzlösungen unter Verwendung von Alkylsilikat-Oligomer als Lösungsmittelbestandteil:

Aus dem Phenolharz (Präkondensat) gemäß Beispiel 10 wurde nach Erreichen des Brechungsindex-Sollwertes eine Harzlösung für das Cold-Box-Verfahren hergestellt, welche die nachfolgend angegebene Zusammensetzung aufwies:
Erfindungsgemäße Harzlösung HA 6:

| | | |
|---|---|---|
| 53 | GT | Phenolharz-Präkondensat aus Beispiel 10 |
| 21 | GT | Dynasil 40 (Alkylsilikat-Oligomer; CAS 68412-37-3) |
| 21 | GT | Tetraethylsilikat (CAS: 78-10-4) |
| 5 | GT | DBE |

### Beispiel 12: Herstellung von Polyisocyanat-Lösungen für das Cold-Box-Verfahren unter Verwendung von Alkylsilikat-Oligomer als Lösungsmittelbestandteil:

Erfindungsgemäße Polyisocyanat-Lösung AA 3:

| | | |
|---|---|---|
| 80 | GT | Diphenylmethandiisocyanat |
| 10 | GT | Tetraethylsilikat |
| 10 | GT | Diotyladipat |
| 0,2 | GT | Säurechlorid |

### Beispiel 13: Herstellung von Cold-Box-Prüfkörpern und kerntechnische Prüfung derselben:

Unter Verwendung der Phenolharz- und Polyisocyanat-Lösungen aus den Beispielen 11 und 12 wurde die in der nachfolgenden Tabelle 5 aufgeführte Formsand-Mischung hergestellt, indem jeweils

| | | |
|---|---|---|
| 100 | GT | Quarzsand H 32 |
| 0,8 | GT | Phenolharzlösung HA 6 |
| 0,8 | GT | Polyisocyanat AA 3 |

in einem Schwingmischer vermischt wurden.

Die Prüfkörper wurden hergestellt gemäß der Vorschrift aus Beispiel 4. Tabelle 5 entspricht im Aufbau der Tabelle 2a.

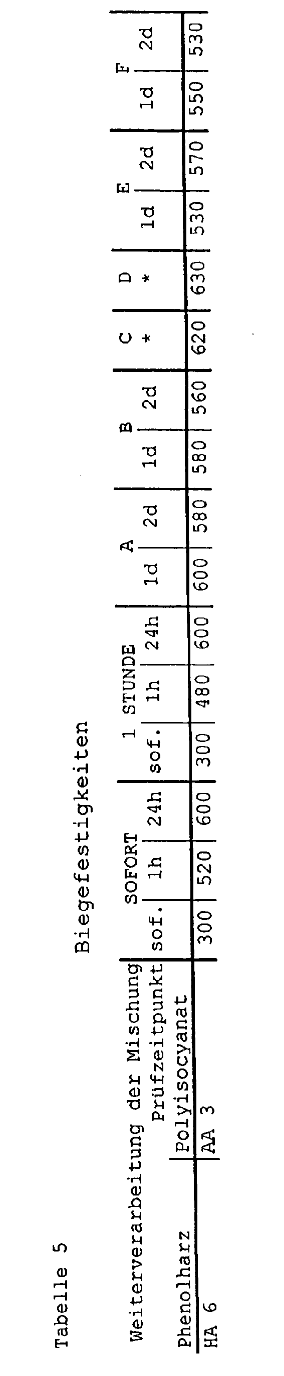

## Patentansprüche

1. Zweikomponenten-Bindemittelsystem, bestehend aus einer Phenolharz-Komponente und einer Polyisocyanat-Komponente, wobei die Phenolharz-Komponente ein Phenolharz des Benzylethertyps und die Polyisocyanat-Komponente ein Polyisocanat mit mindestens zwei Isocyanat-Gruppen pro Molekül umfasst, und wobei zumindest die Phenolharz-Komponente ein Lösungsmittel enthält,
**dadurch gekennzeichnet, dass**
das Lösungsmittel für das Phenolharz eine Substanz umfasst, die aus der Gruppe ausgewählt ist, die Alkylsilikate, Alkylsilikat-Oligomere und deren Gemische umfasst, wobei der Anteil von Alkylsilikaten, Alkylsilikat-Oligomeren oder deren Gemischen in der Phenolharz-Komponente im Bereich zwischen 1 und 40 Gew.% liegt
und/oder
die Polyisocyanat-Komponente ein Lösungsmittel enthält, welches eine Substanz umfasst, die aus der Gruppe ausgewählt ist, die Alkylsilikate, Alkylsilikat-Oligomere und deren Gemische umfasst.

2. Bindemittelsystem nach Anspruch 1, **dadurch gekennzeichnet, daß** die Polyisocyanat-Komponente polymeres Diphenylmethandiisocyanat umfaßt.

3. Bindemittelsystem nach Anspruch 2, **dadurch gekennzeichnet, daß** mehr als die Hälfte der Isocyanat-Gruppen in der Polyisocyanat-Komponente polymerem Diphenylmethandiisocyanat zugeordnet sind.

4. Bindemittelsystem nach einem der vorangehenden Ansprüche, **dadurch gekennzeichnet, daß** das Lösungsmittel für die Phenolharz-Komponente und gegebenenfalls das Lösungsmittel für die Polyisocanat-Komponente zumindest im wesentlichen frei von aromatischen Verbindungen ist.

5. Bindemittelsystem nach einem der vorangehenden Ansprüche, **dadurch gekennzeichnet, daß** das Lösungsmittel für die Phenolharz-Komponente und/oder die Polyisocyanat-Komponente Tetraethylsilikat umfaßt.

6. Bindemittelsystem nach einem der Ansprüche 1 bis 4, **dadurch gekennzeichnet, daß** das Lösungsmittel für die Polyisocyanat-Komponente ein Alkylsilikat oder Alkylsilikat-Oligomer und ein Co-Lösungsmittel umfaßt, wobei das Massenverhältnis von Alkylsilikat oder Alkylsilikat-Oligomer zu Co-Lösungsmittel größer ist als 1:50.

7. Bindemittelsystem nach einem der Ansprüche 1 bis 4, **dadurch gekennzeichnet, daß** es als alleiniges Lösungsmittel oder überwiegenden Lösungsmittelbestandteil für das Polyisocyanat eine Substanz umfaßt, die aus der Gruppe ausgewählt ist, die Alkylsilikate, Alkylsilikat-Oligomere und deren Gemische umfaßt.

8. Bindemittelsystem nach Anspruch 7, **dadurch gekennzeichnet, daß** es
- Tetraethylsilikat als alleiniges Lösungsmittel oder überwiegenden Lösungsmittelbestandteil für das Polyisocyanat oder
- ein Gemisch von Tetraethylsilikat mit einem oder mehreren anderen Alkylsilikaten oder Alkylsilikat-Oligomeren als alleiniges Lösungsmittel oder überwiegenden Lösungsmittelbestandteil für das Polyisocyanat
umfaßt.

9. Bindemittelsystem nach Anspruch 8, **dadurch gekennzeichnet, daß** es Tetraethylsilikat als alleiniges Lösungsmittel oder überwiegenden Lösungsmittelbestandteil für das Polyisocyanat umfaßt, wobei das Massenverhältnis von Polyisocyanat zu Tetraethylsilikat zwischen 95:5 und 65:35 liegt.

10. Bindemittelsystem nach einem der vorangehenden Ansprüche, **dadurch gekennzeichnet, daß** das Lösungsmittel für das Phenolharz aus
(a) einer Substanz, die aus der Gruppe ausgewählt ist, die Alkylsilikate, Alkylsilikat-Oligomere und deren Gemische umfaßt, und
(b) einem Co-Lösungsmittel
besteht,
wobei das Massen-Verhältnis der unter (a) genannten Substanz zu dem Co-Lösungsmittel zwischen 1:60 und 5:1 liegt.

11. Verwendung eines Alkylsilikats oder eines Alkylsilikat-Oligomers als Lösungsmittel oder Lösungsmittelbestandteil für die Phenolharz- und/oder Polyisocyanat-Komponente eines Zwei-Komponenten-Bindemittelsystems auf Polyurethan-Basis, wobei die Phenolharz-Komponente ein Phenolharz des Benzylether-typs umfasst.

12. Verwendung von Tetraethylsilikat als Lösungsmittel oder Lösungsmittelbestandteil für die Phenolharz- und/oder Polyisocyanat-Komponente eines Zwei-Komponenten-Bindemittelsystems auf Polyurethan-Basis, wobei die Phenolharz-Komponente ein Phenolharz des Benzylether-typs umfasst.

13. Verfahren zur Herstellung von Gießereiformen oder -kernen aus einer Formstoffmischung, die mittels eines Bindemittels auf Polyurethan-Basis gebunden wird, **dadurch gekennzeichnet, daß** die Bindung mittels eines Bindemittelsystems nach einem der Ansprüche 1-10 bewirkt wird.

## Claims

1. A two-component binder system consisting of a phenolic resin component and a polyisocyanate component, the phenolic resin component comprising a phenolic resin of the benzyl ether type and the polyisocyanate component comprising a polyisocyanate with at least two isocyanate groups per molecule, and at least the phenolic resin component containing a solvent,
**characterised in that**
the solvent for the phenolic resin comprises a substance which is selected from the group comprising alkyl silicates, alkyl silicate oligomers and the mixtures thereof, the proportion of alkyl silicates, alkyl silicate oligomers or the mixtures thereof in the phenolic resin component being in the range between 1 and 40 wt.%
and/or
the polyisocyanate component contains a solvent which comprises a substance which is selected from the group comprising alkyl silicates, alkyl silicate oligomers and the mixtures thereof.

2. A binder system according to claim 1, **characterised in that** the polyisocyanate component comprises polymeric diphenylmethane diisocyanate.

3. A binder system according to claim 2, **characterised in that** more than half of the isocyanate groups in the polyisocyanate component are associated with polymeric diphenylmethane diisocyanate.

4. A binder system according to any one of the preceding claims, **characterised in that** the solvent for the phenolic resin component and optionally the solvent for the polyisocyanate component is at least substantially free of aromatic compounds.

5. A binder system according to any one of the preceding claims, **characterised in that** the solvent for the phenolic resin component and/or the polyisocyanate component comprises tetraethyl silicate.

6. A binder system according to any one of claims 1 to 4, **characterised in that** the solvent for the polyisocyanate component comprises an alkyl silicate or alkyl silicate oligomer and a cosolvent, wherein the mass ratio of alkyl silicate or alkyl silicate oligomer to cosolvent is greater than 1:50.

7. A binder system according to any one of claims 1 to 4, **characterised in that**, as sole solvent or predominant solvent constituent for the polyisocyanate, it comprises a substance which is selected from the group comprising alkyl silicates, alkyl silicate oligomers or the mixtures thereof.

8. A binder system according to claim 7, **characterised in that** it comprises
- tetraethyl silicate as the sole solvent or predominant solvent constituent for the polyisocyanate or
- a mixture of tetraethyl silicate with one or more other alkyl silicates or alkyl silicate oligomers as the sole solvent or predominant solvent constituent for the polyisocyanate.

9. A binder system according to claim 8, **characterised in that** it comprises tetraethyl silicate as the sole solvent or predominant solvent constituent for the polyisocyanate, the mass ratio of polyisocyanate to tetraethyl silicate being between 95:5 and 65:35.

10. A binder system according to any one of the preceding claims, **characterised in that** the solvent for the phenolic resin consists of
(a) a substance which is selected from the group comprising alkyl silicates, alkyl silicate oligomers and the mixtures thereof, and
(b) a cosolvent,
the mass ratio of the substance stated in (a) to the cosolvent being between 1:60 and 5:1.

11. Use of an alkyl silicate or an alkyl silicate oligomer as a solvent or solvent constituent for the phenolic resin and/or polyisocyanate component of a two-component, polyurethane-based binder system, the phenolic resin component comprising a phenolic resin of the benzyl ether type.

12. Use of tetraethyl silicate as a solvent or solvent constituent for the phenolic resin and/or polyisocyanate component of a two-component, polyurethane-based binder system, the phenolic resin component comprising a phenolic resin of the benzyl ether type.

13. A process for the production of casting moulds or cores from a mould material mixture which is bound by means of a polyurethane-based binder, **characterised in that** binding is effected by means of a binder system according to any one of claims 1-10.

## Revendications

1. Système de liant biconstituant constitué d'un constituant résine de phénol et d'un constituant polyisocyanate, le constituant résine de phénol contenant une résine de phénol du type benzyléther et le constituant polyisocyanate un polyisocyanate avec au moins deux groupes isocyanate par molécule, et au moins le constituant résine de phénol contenant un solvant,
**caractérisé en ce que**
le solvant pour la résine de phénol comprend une substance qui est choisie parmi les silicates d'alkyle, des silicates d'alkyle-oligomères et des mélanges de ceux-ci, la part en silicates d'alkyle, silicates d'alkyl-oligomères ou mélanges de ceux-ci dans le constituant résine de phénol se trouvant dans un domaine entre 1 et 40 % en poids
et/ou
le constituant polyisocyanate contient un solvant, lequel comprend une substance qui est choisie parmi les silicates d'alkyle, des silicates d'alkyle-oligomères et des mélanges de ceux-ci.

2. Système de liant selon la revendication 1, **caractérisé en ce que** le constituant polyisocyanate comprend du diisocyanate de diphénylméthane polymère.

3. Système de liant selon la revendication 2, **caractérisé en ce que** plus de la moitié des groupes isocyanate dans le constituant polyisocyanate sont attribués au diisocyanate de diphénylméthane polymère.

4. Système de liant selon l'une quelconque des revendications précédentes, **caractérisé en ce que** le solvant pour le constituant résine de phénol et éventuellement le solvant pour le constituant polyisocyanate est au moins bien exempt de composés aromatiques.

5. Système de liant selon l'une quelconque des revendications précédentes, **caractérisé en ce que** le solvant pour le constituant résine de phénol et/ou le constituant polyisocyanate est le silicate de tétraéthyle.

6. Système de liant selon l'une quelconque des revendications 1 à 4, **caractérisé en ce que** le solvant pour le constituant polyisocyanate comprend un silicate d'alkyle ou un silicate d'alkyle-oligomère et un co-solvant, le rapport massique du silicate d'alkyle ou silicate d'alkyle-oligomère au co-solvant est supérieur à 1:50.

7. Système de liant selon l'une quelconque des revendications 1 à 4, **caractérisé en ce qu'**il comprend comme solvant unique ou constituant prédominant de solvant pour le polyisocyanate une substance qui est choisie parmi les silicates d'alkyle, des silicates d'alkyle-oligomères ou des mélanges de ceux-ci.

8. Système de liant selon la revendication 7, **caractérisé en ce qu'**il comprend
- du silicate de tétraéthyle comme solvant unique ou constituant prédominant de solvant pour le polyisocyanate ou
- un mélange de silicate de tétraéthyle avec un ou plusieurs autres silicates d'alkyle ou silicates d'alkyle-oligomères comme solvant unique ou constituant prédominant de solvant pour le polyisocyanate.

9. Système de liant selon la revendication 8, **caractérisé en ce qu'**il comprend du silicate de tétraéthyle comme solvant unique ou constituant prédominant de solvant pour le polyisocyanate, le rapport massique du polyisocyanate au silicate de tétraéthyle étant compris entre 95:5 et 65:35.

10. Système de liant selon l'une quelconque des revendications précédentes, **caractérisé en ce que** le solvant pour la résine de phénol est constitué
(a) d'une substance qui est choisie parmi les silicates d'alkyle, des silicates d'alkyle-oligomères ou des mélanges de ceux-ci, et
(b) d'un co-solvant,
le rapport massique de la substance citée sous (a) au co-solvant étant compris entre 1:60 et 5:1.

11. Utilisation d'un silicate d'alkyle ou d'un silicate d'alkyle-oligomère comme solvant ou constituant de solvant pour le constituant résine de phénol et/ou polyisocyanate d'un système de liant biconstituant à base de polyuréthane, le constituant résine de phénol comprenant une résine de phénol du type benzyléther,

12. Utilisation de silicate de tétraéthyle comme solvant ou constituant de solvant pour la résine de phénol et/ou le constituant polyisocyanate d'un système de liant biconstituant à base de polyuréthane, le constituant résine de phénol comprenant une résine de phénol du type benzyléther.

13. Procédé pour la préparation de moules ou de noyaux de fonderie à partir d'un mélange de matières de moule, qui est lié au moyen d'un système de liant à base de polyuréthane, **caractérisé en ce que** la liaison est réalisée au moyen d'un système de liant selon l'une quelconque des revendications 1 à 10.
